Europäisches Patentamt

European Patent Office

Office européen des brevets

(11) Publication number: **0 079 889**
**B1**

# (12) EUROPEAN PATENT SPECIFICATION

(45) Date of publication of patent specification: **27.08.86**

(21) Application number: **81902065.2**

(22) Date of filing: **26.05.81**

(86) International application number:
**PCT/US81/00701**

(87) International publication number:
**WO 82/04332 09.12.82 Gazette 82/29**

(51) Int. Cl.⁴: **G 03 B 7/08, G 03 B 7/16,
G 03 B 7/26, G 03 B 15/05**

(54) PHOTOGRAPHIC CAMERA.

(43) Date of publication of application:
**01.06.83 Bulletin 83/22**

(45) Publication of the grant of the patent:
**27.08.86 Bulletin 86/35**

(84) Designated Contracting States:
**CH DE FR GB LI**

(56) References cited:
**US-A-4 188 103
US-A-4 192 587
US-A-4 288 153**

(73) Proprietor: **POLAROID CORPORATION
549 Technology Square
Cambridge, Massachusetts 02139 (US)**

(72) Inventor: **JOHNSON, Bruce K.
27 Summer Street
Andover, MA 01810 (US)**

(74) Representative: **Abbott, Leonard Charles et al
GILL JENNINGS & EVERY 53-64 Chancery Lane
London WC2A 1HN (GB)**

Courier Press, Leamington Spa, England.

## Description

This invention relates to photographic camera and, more particularly, to photographic cameras providing electric flash illumination.

The use of transient artificial illumination such as from incandescent flash bulbs or electronic strobe units for providing scene illumination for photographic exposures under conditions of low ambient scene light intensity, are well known in the art. Examples of camera systems which utilize strobe illumination under low ambient conditions are described in US—A—4,007,469, 4,086,606, 4,085,414 and 3,438,766.

Additionally, the use of transient illumination during an exposure under higher ambient scene illumination for fill-in flash are also well-known in the art. In the latter case, the transient illumination is generally employed, not as the primary illumination for exposure, but rather as supplementary to the ambient illumination so as to add foreground illumination of the subject, soften shadows, or to generally increase the subject illumination.

In many fill-in arrangements, the camera operator manually selects the use of fill-in flash and the proper exposure parameters which determine the relative effectiveness of the transient illumination and the ambient illumination. Examples of such fill-in flash systems are described in "Flash Fill-In", page 58, Practical Photography, October, 1978; US—A—4,079,389, which requires manual selection of the degree of flash exposure, and US—A—4,023,187 in which the degree of flash exposure is automatically determined. Consequently, at least in the latter case, mere mounting of the flash unit on the camera under normal scene light conditions provides selection of the fill-in flash mode.

However, the operator must still make a deliberate selection of this mode and often, either forgets to make use of this fill-in flash arrangement, or deliberately avoids use of the latter perhaps for reasons of economy and a lack of understanding or appreciation of the value of fill-in flash. Hence, while the prior art suggests using transient illumination under varying conditions of scene illumination, the determination of whether to use transient illumination in addition to the normal scene illumination is generally left to the decision of the operator. Consequently, it is an object of this invention to provide a photographic camera automatically employing improved exposure control under substantially all conditions of ambient scene illumination, at least when the subject is within the effective range of the flash.

US—A—4,188,103 discloses a flash photographic apparatus having a range finder and a scanning shutter and in which the flash is fired after a period which varies with the range of the subject; it may additionally vary with the scene light level.

US—A—4,192,587 describes a flash photographic system in which a camera can be operated in a fill-flash mode. In this mode, a strobe is fired either when a predetermined proportion of the required light has been received by a photodetector, or when a range-dependent interval terminates.

A photographic camera according to the invention comprises an electrically controlled shutter arrangement including means movable to unblock and block an exposure path to a focal plane to initiate and terminate respectively an exposure interval, the movable means defining, as the exposure interval continues, a pattern of varying aperture values, including progressively enlarging aperture values; a photoresponsive device for evaluating scene light to terminate the exposure when a predetermined film exposure has been achieved; an electronic flash unit affixed to the housing; range-determining means for producing a range signal corresponding to the distance of a subject from the camera; and means responsive to the range signal and operative whenever the subject is within the effective range of the flash to fire the electronic flash unit at a selected time during the exposure interval, corresponding to an aperture value having a given relationship to the range, to provide a controlled amount of flash illumination, and is characterized by a mode selector, connected to receive a signal representing pre-exposure ambient light from the photoresponsive device, for selecting between two relationships between the range of the subject and the aperture at which the electronic flash unit is fired, a first relationship serving for exposure made with a scene light intensity less than a given intensity (substantially flash illumination) and a second relationship for exposures made with a greater scene light intensity (fill-in flash).

In order that the invention may be better understood, an example of apparatus embodying the invention will now be described with reference to the accompanying drawings, in which:—

Figure 1 is a diagrammatic side elevational view of a photographic camera embodying the present invention with portions cut away to reveal interior elements thereof;

Figure 2 is a front elevational view of the camera shown in Figure 1 with some interior portions shown in dotted outline; and

Figure 3 is a block diagram depicting many of the electrical functions of the camera shown in Figures 1 and 2.

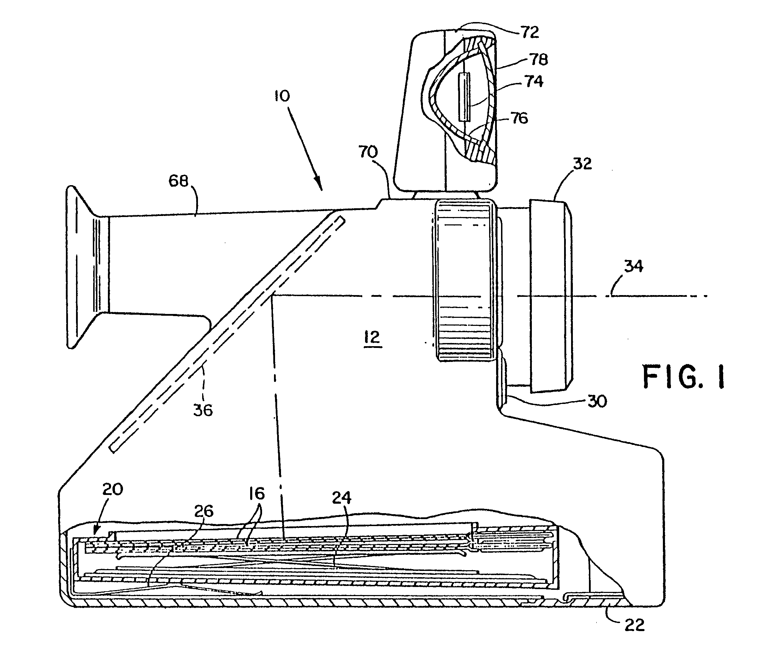

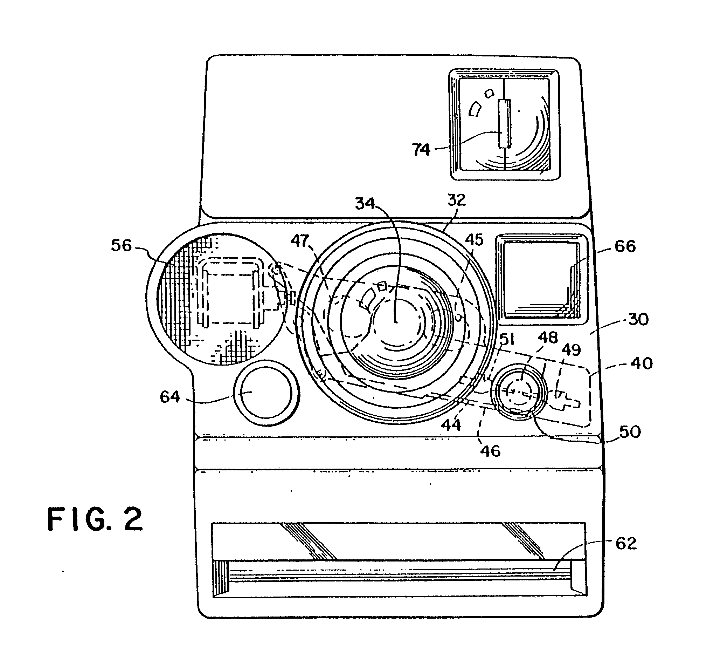

In Figures 1 and 2, there is shown a camera 10 comprising a housing 12 configured to receive a film pack 14 which includes a plurality of film units 16 mounted over a flat battery 18 as, for example, is described in U.S. Patent Nos. 3,543,662; 3,705,542; 3,748,984 and 3,779,770. In this regard, the camera 10 is a self-developing camera designed for use with a film pack of the type manufactured and sold by the Polaroid Corporation as the Polaroid SX-70 Land Film pack.

Within the camera housing 12 is a receiving chamber 20, access to which is provided by a door member 22. The chamber 20 is designed to receive the film pack 16 in a fixed location with a spring member 24, carried within the film pack 14 as noted in the aforementioned U.S. Patent No. 3,543,662, urging the film units 16 forwardly such that the uppermost unit thereof is positioned at the focal plane of the camera. Included within the receiving chamber 20 are a pair of battery contacts 26 which extend within the film pack 14 to provide connection between the camera 10 and the battery 18.

Mounted on a front wall 30 of the housing 12 is an adjustable lens assembly 32 which is configured for focusing image carrying rays from the photographic scene along an exposure path 34 to a mirror 36 from which they are reflected to the uppermost film unit 16. Control of the exposure path is provided by a scanning shutter system 40, under the control of an electrical solenoid 42 as is explained in detail in U.S. Patent No. 3,942,183. In this arrangement, the scanning shutter system employs a pair of blades 44 and 46 which, upon release by the solenoid 42, are spring biased to bring a pair of primary or taking apertures 45 and 47, respectively, provided within the blades, into increasing coincidence at the taking path 34 so as to provide increasing aperture values thereat during initiation of the exposure interval. Hence, the scanning shutter system 40 in effect is a diaphragm-shutter which provides electrically actuatable means for unblocking and blocking the exposure path to define an exposure interval and for defining varying aperture values in operative relation to the exposure path during that interval.

A photoresponsive device or photocell 48 is carried within the camera 10, behind the shutter 40, and exposed to scene light through a lens arrangement 50 also mounted on the front face 30 of the camera. Scene light transmitted to the photocell is controlled in conjunction with film exposure, as noted in the aforementioned US—A—3,942,183, by means of a pair of secondary apertures 49 and 51 also carried by the shutter blades 44 and 46; the secondary apertures operate in a tracking relation to the taking apertures of the blades.

As previously indicated, the camera 10 is of a self-developing type in which the film is processed to a viewable condition. Hence, following the exposure of the uppermost film unit, the latter is transported from the camera by way of a processing station (not shown) located between the film pack receiving chamber 20 and the film exit slot 62.

A camera actuator switch or button 64 is also mounted on the front face 30 in a convenient location to facilitate camera actuation by the operator. Additionally, a viewing window 66 is located in the front face 30 and operates in conjunction with a viewing system 68 to permit viewing and framing of the scene by the operator.

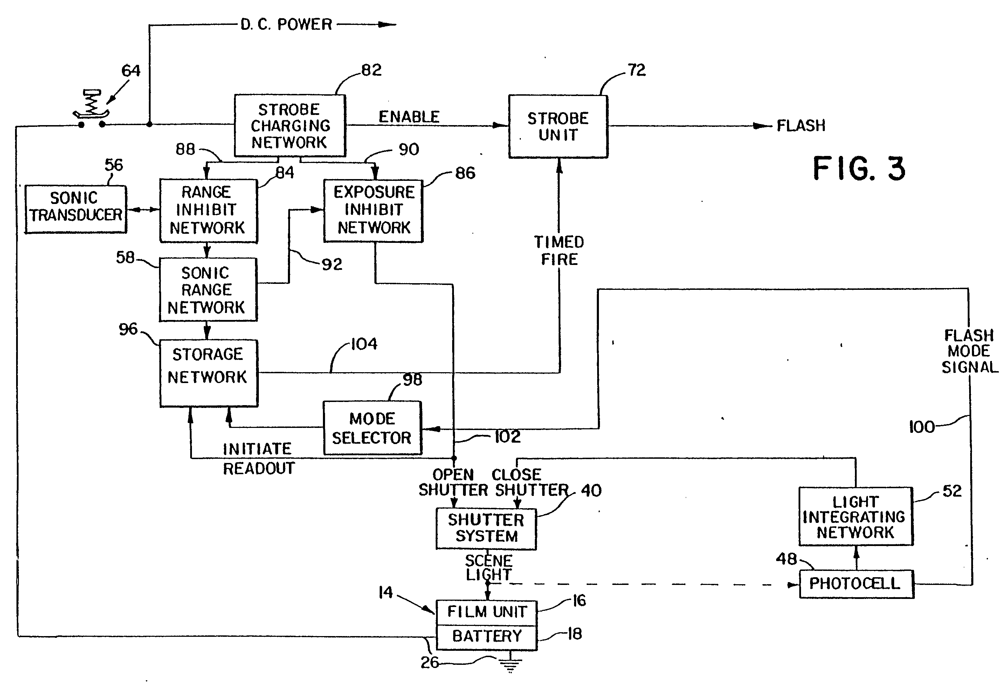

Permanently affixed to an upper surface 70 of the housing 10 is an electronic strobe unit 72, which includes a flash discharge tube 74 located in a suitable reflector 76 behind a lens 78; the latter serving to focus light from the flash tube 74 into the zone of view of the camera 10. The electronic flash unit 72 is provided as an integral part of the camera 10 in accordance with the invention and is powered from the battery which is carried in the film pack. In this regard, the electronic strobe may be of the type described in US—A—4,074,295 entitled "Compact Accessory Strobe for Cameras with Battery Enclosed Film Pack" issued to R. Kee on February 14, 1978. Unlike the aforementioned electronic flash unit, however, the flash unit of the present invention is an integral part of the camera and is intended for use in all exposures or at least where the strobe light is effective, as will be subsequently explained with regards to Fig. 3.

Flash firing is controlled by a transducer 56, mounted on the front face 30 of the camera 10, which operates as later explained in conjunction with a sonar range network 58, of the type described in US—A—4,199,246. The range network 58 includes appropriate circuitry (not shown) which, by means of the transducer 56 emits an ultrasonic burst directed towards a central portion of the photographic scene so as to be reflected from subjects positioned therein and which, upon receipt of an echo from such subjects, by virtue of the elapsed time from emission to echo, provides an appropriate signal corresponding to this time interval and, hence, to the distance of the subject from the camera 10. This subject distance signal is utilized in the illustrated embodiment primarily for controlling the firing time of the electronic flash unit 72 to ensure the selection of a proper aperture value as will be more fully explained below. Additionally, although not necessary to the present invention, the sonic signal is also preferably utilized for focusing of the lens assembly 32, and in the latter case, an electrically energizable lens driving arrangement (not shown) would be provided for lens focusing.

Turning now to Fig. 3, wherein the operational arrangement of the camera 10 is shown in block diagram form, it should be first noted that the film pack 14 or, more particularly, the battery 18 thereof, is employed as the sole source of energy for the complete camera which includes the strobe unit 72. In this arrangement, operation of the actuator button 64 by the camera operator powers up the camera and through a logic sequence as later explained, triggers each of the operation units into operation at an appropriate point in the camera cycle. A conventional latching arrangement (not shown) is employed in conjunction with the camera button 64 to maintain camera operation throughout the complete cycle; the latch being activated with initial button operation and released upon the operation of the final event in the cycle.

In the illustrated circuit, actuation of the button 64 initiates energization of a strobe charging network 82 which, when fully charged, enables the strobe unit 72 for subsequent firing. During charging of the charging network 82, operation of other components is inhibited by appropriate logic circuitry, designated by a range inhibit circuit 84 and an exposure inhibit network 86. The latter networks may be provided by any suitable means, such as a flip-flop circuitry or conventional logic arrangements wherein network 84 clamps or holds the sonic range network 58 inoperative until strobe charging is complete and network 86 holds the shutter system inoperative until both strobe charging and subject ranging is complete.

Consequently, in this arrangement during strobe charging the inhibit networks 84 and 86 are active due to a "charging" signal on lines 88 and 90. When charging ceases, the range inhibit network 84 is released, which in turn triggers the sonic range network 58 into operation. Activation of the exposure inhibit network continues, however, due to a "ranging" signal presented on line 92.

Upon activation, the sonic range network 58 initially operates in a transmit mode to pulse the transducer 56 which transmits a sonic burst toward the subject to be photographed and then in a receive mode listens for the sonic echo therefrom. The elapsed time, being proportional to subject distance, is stored as a timed range signal in a storage network 96, for example, a digital clock and counter system which is activated in synchronism with the sonic transmission and stopped upon the echo return, such that the stored count provides an appropriate range signal.

Prior to completing the operational description of the camera, the utilization of the range information will be described. As indicated, the range signal is principally employed herein for dynamic selection of a flash aperture in a manner at least similar to that described in US—A—4,188,103. Hence, the aperture scanning shutter system produces changing aperture values during the exposure and the strobe is fired at a time value coordinated with subject range and the scanning rate of the shutter so that the pulse of strobe light is synchronized in time with an aperture or, more precisely, a very narrow range of aperture values selected in dependence upon subject distance.

That is, as the shutter opens, increasingly enlarging aperture values are provided until adequate scene light has been received by the photocell 48 to charge a summing capacitor included within the light integrating network 52 to an appropriate level determined in accordance with the exposure parameters of the film unit 16. During this scanning operation of the shutter, various aperture values are defined, each in accordance with an elapsed time interval as measured from either first light or the opening actuation of the shutter. Consequently, the strobe unit is timed to be fired when an appropriate aperture selected in accordance with the subject distance is provided by the shutter system 40. This may be accomplished by design of the shutter system to provide aperture values varying at a rate comparable to the distance time relationship of the sonic range network or by converting the sonically derived ranging time in proportion to the design curve of the opening rate of the shutter. In either case, the shutter system 40 and the storage network 96 are coordinated so that the strobe unit 72 will be fired at a time at which an appropriate aperture selected in accordance with subject distance is in operative relation over the exposure path 34 in the camera 10.

Since the ratio of sonic range time versus subject distance is known as well as the aperture scanning rate, the clock or count rate of the storage network can be provided such that the timed output thereof for any given subject distance will be equal to the time it takes for the shutter, as measured from first light, to reach an aperture value selected in accordance with subject distance. For low ambient scene light, the selected aperture value is directly related to subject distance in a conventional manner such that with a constant flash output, proper exposure of the film is assured independently of subject range up to a maximum subject range which is determined by the maximum aperture of the camera and the strobe output.

For fill-in flash, where the ambient scene light is no longer negligible, the strobe contribution to the exposure is reduced by selecting a smaller flash aperture than that previously described. This is accomplished in the illustrated circuit by a mode selector 98 which alters or switches the storage network 96 to provide a flash time signal appropriate to a fill-in flash mode. For example, when the ambient scene light is above a selected threshold value, the mode selector 98 may be appropriately triggered to shift the counting of the storage network to a slower rate, thereby providing a shorter time value for a given subject distance. This, in turn, provides an earlier flash fire, and, hence, a smaller aperture value which, in turn, results in less strobe contribution for a given subject distance.

As described, the mode selection requires pre-exposure evaluation of scene light, for example, by an additional photocell or provision for presentation of the photocell 48 to scene light prior to shutter opening, in which case a flash mode signal may be made available from the photocell 48 by way of line 100 prior to exposure actuation. Alternately, the mode selection may be provided simultaneously with initiation of exposure by altering the readout rather than the read in of the range storage network as previously described. That is, the range signal may always be stored as a timed count suitable for fill-in flash fire time and then, upon readout, appropriately altered by a given ratio or fixed delay to provide flash fire for the flash mode.

Returning once again to the overall operation, when the sonic range network receives the subject echo, indicating completion of ranging, the ranging signal presented to the exposure inhibit network 86 over line 92 is terminated, such that this inhibit network is released and the shutter 40 is, in turn, triggered via line 102 to open. This, in turn, emits scene light to the uppermost film unit of the film pack 16 and to the photocell 48; with current from the latter being summed in the light integrating network 52 in a conventional manner.

Simultaneous with opening of the shutter system 40, the storage network 96 is triggered to initiate its readout or, that is, start the count down for flash fire. For example, the storage network 96 may include an up and down counter which reads up on range storage and is then read down, with the strobe fire signal being provided via line 104 to the strobe unit 72, when the count readout is complete. As indicated, the burst of light from the strobe unit 72 by virtue of the tailored flash time will occur when an aperture value selected in accordance with subject range is provided by the shutter.

Subsequently, when the integrating network reaches a predetermined summing value, a close command signal is delivered to the shutter system 40 which closes the shutter to thereby terminate the exposure. While not depicted in Fig. 3, following the closing of the shutter, the exposed film unit is advanced from its exposure position through a processing station (not shown) and from the camera.

While not necessary to the operation of the illustrated embodiment, since the strobe will be ineffective at large subject distances, a switching arrangement (not shown) can be provided to eliminate strobe flash for such exposures. Hence, it should be understood that the circuit of Fig. 3 provides control means programmed to be responsive to every operation of the actuator 64, at least when photographing a subject within the maximum effective range, for actuating the shutter, or unblocking and blocking means, for determining the ambient light level, for firing the strobe 72 at an appropriate aperture as selected by the range system, and for then terminating the exposure in accordance with the ambient scene light level.

Since certain changes may be made in the above-described system and apparatus without departing from the scope of the invention as claimed, it is intended that all matter contained in the description thereof or shown in the accompanying drawings shall be interpreted as illustrative and not in a limiting sense.

**Claims**

1. A photographic camera comprising:
an electrically controlled shutter arrangement (40) including means movable to unblock and block an exposure path to a focal plane to initiate and terminate respectively an exposure interval, the movable means defining, as the exposure interval continues, a pattern of varying aperture values, including progressively enlarging aperture values;
a photoresponsive device (48, 52) for evaluating scene light to terminate the exposure when a predetermined film exposure has been achieved;
an electronic flash unit (72) affixed to the housing;
range-determining means (56, 58) for producing a range signal corresponding to the distance of a subject from the camera;
and means (96) responsive to the range signal and operative whenever the subject is within the effective range of the flash to fire the electronic flash unit (72) at a selected time during the exposure interval, corresponding to an aperture value having a given relationship to the range, to provide a controlled amount of flash illumination, characterized by a mode selector (98), connected to receive a signal representing pre-exposure ambient light from the photoresponsive device (48), for selecting between two relationships between the range of the subject and the aperture at which the electronic flash unit is fired, a first relationship serving for exposures made with a scene light intensity less than a given intensity (substantially flash illumination) and a second relationship serving for exposures made with a greater scene light intensity (fill-in-flash).

2. A photographic camera in accordance with claim 1, including means for receiving a battery (18) and in which the electronic flash unit (72) includes a firing circuit including a capacitance chargeable by the battery, the camera further comprising a manual actuator (64) and means (86) for inhibiting initiation of the exposure interval until the capacitance is charged.

3. A photographic camera in accordance with claim 2, further including means (84) for additionally inhibiting initiation of the exposure interval until the range-determining means has produced the said range signal.

4. A photographic camera in accordance with any one of claims 1 to 3, in which the range-determining means (56, 58, 96) transmits a sonic pulse and includes a counter (96) for counting the interval between the transmission of the sonic pulse and the reception of its echo, and by means of which the firing of the electronic flash unit (72) is delayed, during the exposure interval, to an extent dependent upon the count in the counter of the range-determining means.

5. A photographic camera in accordance with claim 4, in which the said counter (96) is an up/down counter which counts up until stopped by receipt of the echo and counts down to zero to determine the interval between the initiation of the exposure interval (102) and the firing (104) of the electronic flash unit (72).

**Patentansprüche**

1. Photographische Kamera mit einem elektrisch gesteuerten Verschlußaufbau (40), der Mittel aufweist, die beweglich sind, um einen nach einer Brennebene führenden Belichtungspfad freizugeben und abzusperren, und um so ein Belichtungsintervall einzuleiten bzw. zu beenden, wobei die beweglichen Mittel, während das Belichtungsintervall fortschreitet, ein Muster sich ändernder Blendenöffnungen einschließlich progressiv sich vergrößernden Blendenöffnungen definieren;
mit einer lichtempfindlichen Vorrichtung (48, 52), um das Szenenlicht abzuschätzen und um die Belichtung zu beenden, wenn eine vorbestimmte Filmbelichtung erreicht ist;
mit einem Elektronenblitzgerät (72), welches am Gehäuse festgelegt ist;

mit einem Entfernungsmesser (56, 58) zur Erzeugung eines Entfernungssignals, welches dem Abstand zwischen Aufnahmegegenstand und Kamera entspricht;

und mit Mitteln (96), die auf das Entfernungssignal ansprechen und immer dann wirksam sind, wenn der Aufnahmegegenstand innerhalb des Werkbereiches des Blitzes befindlich ist und das Elektronenblitzgerät (72) zu einem vorgewählten Zeitpunkt während des Belichtungsintervalls zünden, wobei dieser Zeitpunkt einem Blendenwert entspricht, der eine gegebene Beziehung zur Entfernung aufweist, um eine gesteuerte Blitzbeleuchtung zu liefern, gekennzeichnet durch einen Modenwähler (98), der ein Signal von der lichtempfindlichen Vorrichtung (48) empfängt, welches dem Umgebungslicht vor der Belichtung entspricht und der zwischen zwei Beziehungen zwischen der Aufnahmeentfernung und der Blende, bei der der Elektrodenblitz gezündet wird, auswählt, wobei die erste Beziehung dazu dient, Belichtungen mit einer Szenenlichtintensität durchzuführen, die geringer ist als eine gegebene Intensität (im wesentlichen Blitzbeleuchtung) und eine zweite Beziehung dazu dient, Belichtungen in Verbindung mit einer größeren Szenenlichtintensität durchzuführen (Ausfüllblitz).

2. Photographische Kamera gemäß Anspruch 1 mit Mitteln zur Aufnahme einer Batterie (18), wobei das Elektronenblitzgerät (72) eine Zündschaltung mit einem Kondensator aufweist, der durch die Batterie aufladbar ist und wobei die Kamera außerdem einen manuell betätigbaren Auslöser (64) und Mittel (86) aufweist, um die Einleitung des Belichtungsintervalls zu sperren bis der Kondensator aufgeladen ist.

3. Photographische Kamera gemäß Anspruch 2, bei der außerdem Mittel (84) vorgesehen sind, um zusätzlich die Einleitung des Belichtungsintervalls zu sperren, bis der Entfernungsmesser die Erzeugung des Entfernungssignals vollendet hat.

4. Photographische Kamera gemäß einem der Ansprüche 1 bis 3, bei welcher der Entfernungsmesser (56, 58, 96) einen Schallimpuls ausstrahlt und einen Zähler (96) aufweist, um das Intervall zwischen der Abstrahlung des Schallimpulses und dem Empfang seines Echos zu zählen, wobei Mittel vorgesehen sind, durch die die Zündung des Elektronenblitzgerätes (72) während des Belichtungsintervalls in einem Ausmaß verzögert wird, welches von der Zählung im Zähler des Entfernungsmessers abhängt.

5. Photographische Kamera gemäß Anspruch 4, bei der der Zähler (96) ein Vorwärts-Rückwärts-Zähler ist, der vorwärts zählt, bis er durch Empfang des Echos angehalten wird, und der auf Null zurückzählt, um das Intervall zwischen der Einleitung des Belichtungsintervalls (102) und der Zündung (104) des Elektronenblitzgerätes (72) zu bestimmen.

**Revendications**

1. Appareil photographique comportant:
un système (40) d'obturation à commande électrique comprenant un moyen mobile pour débloquer et bloquer un trajet de lumination vers un plan focal pour déclencher et mettre fin à un temps d'exposition, ce moyen mobile déterminant pendant le temps d'exposition une répartition de valeurs d'ouverture variables, y compris des valeurs d'ouverture progressivement croissantes;

un dispositif photosensible (48, 52) destiné à évaluer l'éclairement du champ de prise de vues afin de terminer l'exposition lorsqu'une lumination prédéterminée de la pellicule est atteinte;

un flash électronique (72) fixé au boîtier;

un moyen (56, 58) de mise au point destiné à produire un signal de mise au point correspondant à la distance séparant le sujet de l'appareil photographique;

et un moyen (96) sensible au signal de mise au point qui fonctionne lorsque le sujet se trouve dans le champ opérationnel du flash, de manière à déclencher une lampe-éclair (72) à un moment sélectionné pendant le temps d'exposition, correspondant à une valeur d'ouverture ayant un rapport donné avec la distance, afin de fournir une quantité contrôlée d'éclairage flash, et caractérisé par un sélecteur (98) de mode connecté de manière à recevoir un signal représentant l'éclairage ambiant avant l'exposition d'un dispositif photo-sensible (48), et dont la fonction est de sélectionner l'un de deux rapports entre la distance du sujet et l'ouverture à laquelle le flash est déclenché, un premier rapport servant à effectuer les prises de vues quand l'intensité lumineuse ambiante est inférieure à une intensité donnée (sensiblement l'éclairement du flash) et un deuxième rapport servant lors des expositions effectuées avec une intensité lumineuse plus forte (lumière d'appoint).

2. Appareil photographique selon la revendication 1, comportant un moyen (18) pour recevoir une pile et dans lequel un flash électronique (72) comporte un circuit de déclenchement comportant un condensateur chargeable par la pile, l'appareil photographique comportant, en outre, un déclencheur manuel (64) et un moyen (86) d'interdiction du déclenchement du temps d'exposition jusqu'à ce que le condensateur soit chargé.

3. Appareil photographique selon la revendication 2, comportant également un moyen (84) d'interdiction supplémentaire du déclenchement du temps d'exposition jusqu'à ce que les moyens de mise au point produisent le signal de mise au point.

4. Appareil photographique selon l'une quelconque des revendications 1 à 3, dans lequel le moyen (56, 58 et 96) de mise au point émet une impulsion sonique et comporte un compteur (96) pour compter l'intervalle entre l'impulsion sonique et la réception de l'écho de celle-ci, et qui permet de retarder le déclenchement du flash (72) pendant le temps d'exposition, pour une durée qui dépend du compte effectué par le compteur faisant partie du moyen de mise au point.

5. Appareil photographique selon la revendication 4, dans lequel ce compteur (96) est un compteur-décompteur qui compte par ordre croissant jusqu'à ce que la réception de l'écho l'arrête puis par ordre décroissant jusqu'à zéro pour déterminer l'intervalle entre l'enclenchement du temps d'exposition (102) et le déclenchement (104) du flash électronique (72).

FIG. I

FIG. 2

# FIG. 3

FLASH MODE SIGNAL

FLASH

STROBE UNIT — 72

LIGHT INTEGRATING NETWORK — 52

PHOTOCELL — 48

100

TIMED FIRE

ENABLE

STROBE CHARGING NETWORK — 82

EXPOSURE INHIBIT NETWORK — 86

D. C. POWER

90

84

88

92

RANGE INHIBIT NETWORK

SONIC RANGE NETWORK — 58

STORAGE NETWORK — 96

MODE SELECTOR — 98

104

102

INITIATE READOUT

OPEN SHUTTER   CLOSE SHUTTER

SHUTTER SYSTEM — 40

SCENE LIGHT

FILM UNIT — 16

BATTERY — 18

14

26

SONIC TRANSDUCER — 56

64

3